# EUROPEAN PATENT APPLICATION

(11) **EP 4 625 152 A2**
(43) Date of publication of application: **01.10.2025**
(21) Application number: 25163495.2
(22) Date of filing: 13.03.2025
(51) Int. Cl.: G06F 8/65

(54) **UPDATING DEVICE AND IMAGE FORMING APPARATUS**

(30) Priority: 25.03.2024 JP 2024048691
(71) Applicant: KYOCERA Document Solutions Inc., Osaka-shi, Osaka, 540-8585 (JP)
(72) Inventor: YOSHIMOTO, Yusuke, Osaka-shi, Osaka 540-8585 (JP)
(74) Representative: Herrero & Asociados, S.L.

(57) **Abstract**

An updating device (3) includes a communication device (34), a storage device (351), and a control device (31) that acts as a consistency decider (311), a newness decider (312), a usability decider (313), and a firmware transmitter (314). The consistency decider (311) decides whether consistent updating firmware, of the same type and purpose of use as firmware currently in use installed in an image forming apparatus (1), exists among the plurality of pieces of updating firmware stored in the storage device (351). The newness decider (312) decides whether the consistent updating firmware is of a newer version than the firmware currently in use. The usability decider (313) decides that the consistent updating firmware of the newer version than the firmware currently in use, is usable for updating. The firmware transmitter (314) transmits the consistent updating firmware, decided to be usable for updating, to the image forming apparatus (1) through the communication device (34).

## Description

### BACKGROUND

The present invention relates to an updating device and an image forming apparatus, and in particular to a technique to update firmware installed in the image forming apparatus.

Firmware installed in an image forming apparatus, such as a printer or a multifunction peripheral, may be updated, when a function is added, or one of existing functions has failed. To update the firmware, for example, an updating firmware is downloaded from a server, via a personal computer (PC).

### SUMMARY

The invention proposes further improvement of the foregoing technique.

In an aspect, the invention provides an updating device including a communication device, a storage device, and a control device. The communication device communicates with an image forming apparatus. The storage device stores therein a firmware package including a plurality of pieces of updating firmware. The control device includes a processor, and acts, when the processor executes a control program, as a consistency decider, a newness decider, a usability decider, and a firmware transmitter. The consistency decider decides, on a basis of a type and a purpose of use of each of a plurality of pieces of updating firmware, and a type and a purpose of use of at least one piece of firmware currently in use installed in the image forming apparatus, whether consistent updating firmware, the type and the purpose of use of which are same as those of the at least one piece of firmware currently in use, exists among the plurality of pieces of updating firmware include. The newness decider decides, when the consistency decider decides that the consistent updating firmware exists, whether a version of the consistent updating firmware is newer than a version of the firmware currently in use, the type and the purpose of use of which are same as those of the consistent updating firmware. The usability decider decides that the consistent updating firmware, the version of which has been decided by the newness decider to be newer than the version of the firmware currently in use, is usable for updating. The firmware transmitter transmits the consistent updating firmware, decided by the usability decider to be usable for updating, to the image forming apparatus through the communication device.

In another aspect, the invention provides an image forming apparatus including an image forming device, a storage device and a control device. The image forming device forms an image on a recording sheet. The storage device stores therein a firmware package including a plurality of pieces of updating firmware, and at least one piece of firmware currently in use. The control device includes a processor, and acts, when the processor executes a control program, as a consistency decider, a newness decider, a usability decider, and a controller. The consistency decider decides, on a basis of a type and a purpose of use of each of a plurality of pieces of updating firmware, and a type and a purpose of use of at least one piece of firmware currently in use, whether consistent updating firmware, the type and the purpose of use of which are same as those of the at least one piece of firmware currently in use, exists among the plurality of pieces of updating firmware include. The newness decider decides, when the consistency decider decides that the consistent updating firmware exists, whether a version of the consistent updating firmware is newer than a version of the firmware currently in use, the type and the purpose of use of which are same as those of the consistent updating firmware. The usability decider decides that the consistent updating firmware, the version of which has been decided by the newness decider to be newer than the version of the firmware currently in use, is usable for updating. The controller updates the firmware currently in use, using the consistent updating firmware decided by the usability decider to be usable for updating.

### BRIEF DESCRIPTION OF THE DRAWINGS

Fig. 1 is a schematic diagram showing an overall configuration of an information processing system;
Fig. 2A to Fig. 2C are tables each showing an example of firmware installed in an image forming apparatus;
Fig. 3 is a table showing an example of a firmware package;
Fig. 4 to Fig. 6 are tables each showing an example of a comparison result between updating firmware and firmware currently in use;
Fig. 7 is a functional block diagram, schematically showing an essential internal configuration of the image forming apparatus;
Fig. 8 is a flowchart showing an example of an updating process;
Fig. 9 is a table showing another example of the firmware package; and
Fig. 10 is a flowchart showing another example of the updating process.

### DETAILED DESCRIPTION

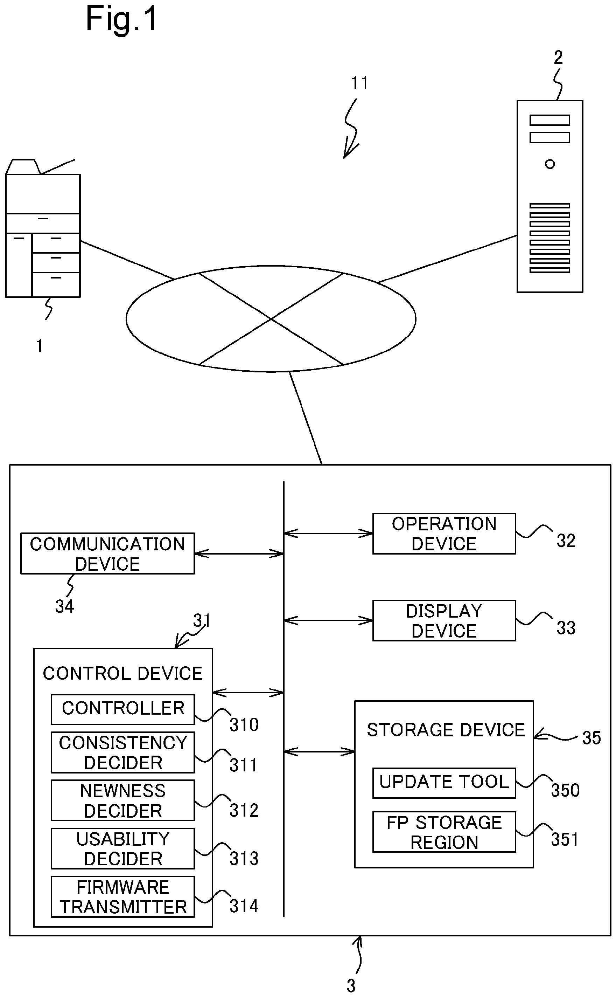

Hereafter, an updating device and an image forming apparatus according to an embodiment of the invention will be described, with reference to the drawings. The updating device according to the embodiment of the invention is, for example, an information processing apparatus. Fig. 1 is a schematic diagram showing an overall configuration of an information processing system 11 according to the embodiment of the invention.

The information processing system 11 includes an image forming apparatus 1, a server 2, and an information processing apparatus 3, which are located on a network such as the internet. The image forming apparatus 1 is a multifunction peripheral having a plurality of functions, such as copying, printing, scanning, and facsimile transmission. In the image forming apparatus 1, firmware is installed.

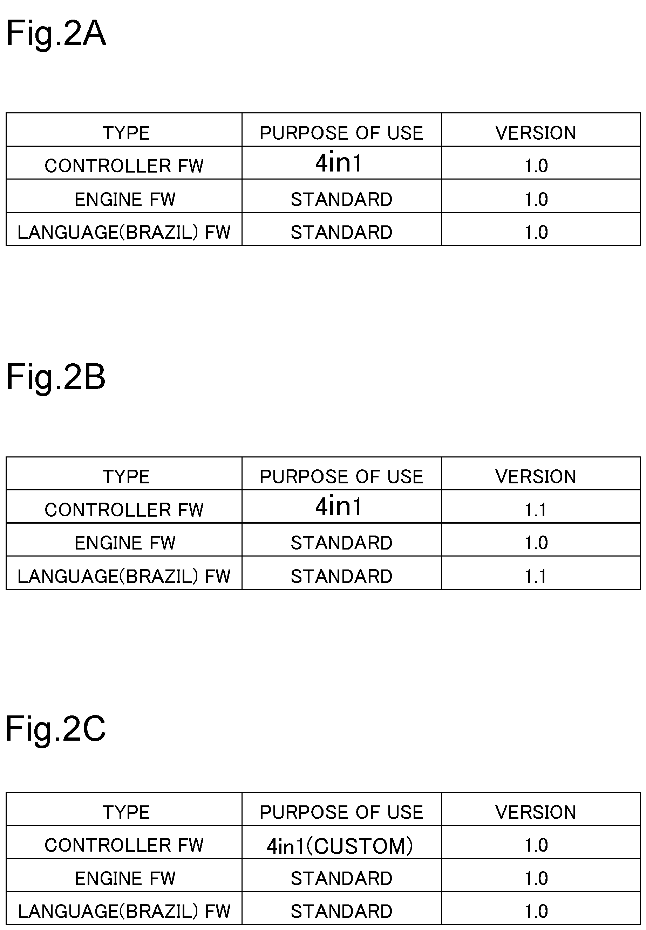

Fig. 2A to Fig. 2C each show an example of the firmware installed in the image forming apparatus 1. Each of Fig. 2A to Fig. 2C shows three pieces of firmware installed in the image forming apparatus 1, and the type, purpose of use, and version of each of the three pieces of firmware.

Fig. 2A shows the firmware the type of which is "controller firmware (FW)", the purpose of use of which is "4in1", and the version of which is "1.0", the firmware the type of which is "engine FW", the purpose of use of which is "standard", and the version of which is "1.0", and the firmware the type of which is "language (Brazil) FW", the purpose of use of which is "standard", and the version of which is "1.0".

Fig. 2B shows the firmware the type of which is "controller FW", the purpose of use of which is "4in1", and the version of which is "1.1", the firmware the type of which is "engine FW", the purpose of use of which is "standard", and the version of which is "1.0", and the firmware the type of which is "language (Brazil) FW", the purpose of use of which is "standard", and the version of which is "1.1".

Fig. 2C shows the firmware the type of which is "controller FW", the purpose of use of which is "4in1 (custom)", and the version of which is "1.0", the firmware the type of which is "engine FW", the purpose of use of which is "standard", and the version of which is "1.0", and the firmware the type of which is "language (Brazil) FW", the purpose of use of which is "standard", and the version of which is "1.0",

The server 2 manages a firmware package (update file) containing a plurality of pieces of updating firmware that are packaged, and transmits the firmware package to the information processing apparatus 3.

The information processing apparatus 3 may be, for example, a personal computer (PC). The information processing apparatus 3 includes a control device 31, an operation device 32, a display device 33, a communication device 34, and a storage device 35. These components can transmit and receive data or signals to and from each other, through a communication bus.

The operation device 32 includes a keyboard, a mouth, and so forth. The operation device 32 inputs a command or characters, received through the operation of the user, to the control device 31. The operation device 32 also receives an instruction inputted through the operation of the user. The display device 33 includes, for example, a liquid crystal display (LCD). The display device 33 displays various types of images, under the control of the control device 31.

The communication device 34 is a communication interface that transmits and receives various types of data to and from an external device, such as the image forming apparatus 1 or the server 2 located inside a local area, or on the internet.

The storage device 35 is a large-capacity storage device such as a hard disk drive (HDD) or a solid-state drive (SSD), and contains various control programs. The storage device 35 contains an update tool 350, as an example of the programs. The update tool 350 is a program for updating the firmware installed in the storage device 35.

The storage device 35 includes a firmware package (FP) storage region 351. In the FP storage region 351, for example, the firmware package in which a plurality of pieces of updating firmware are packaged, is stored.

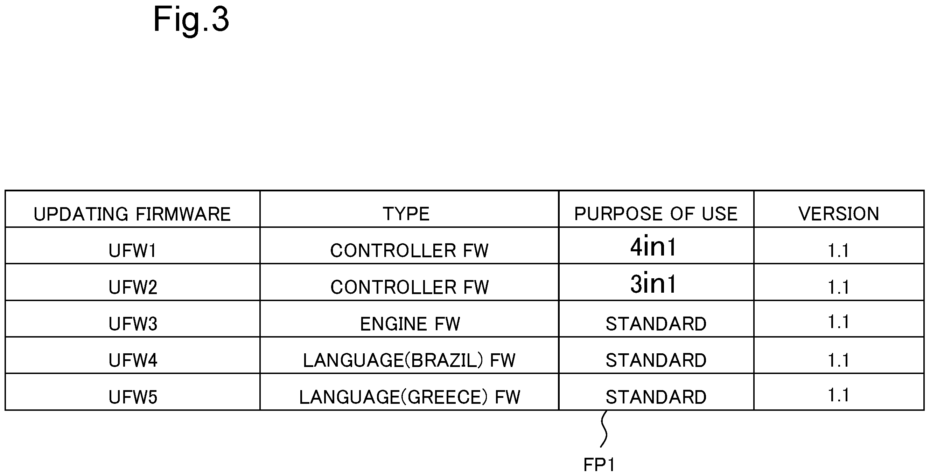

Fig. 3 is a table showing an example of the firmware included in the package firmware package. The firmware package FP1 shown in Fig. 3 includes five pieces of updating firmware UFW1 to UFW5 (hereinafter, collectively "updating firmware UFW", as the case may be). Fig. 3 shows the type, purpose of use, and version of each of the five pieces of updating firmware UFW1 to UFW5. For example, the updating firmware UFW1 is of the type "controller FW", the purpose of use of which is "4in1", and the version of which is "1.1".

The control device 31 includes a processor, a random-access memory (RAM), a read-only memory (ROM), and an exclusive hardware circuit. The processor is, for example, a central processing unit (CPU), an application specific integrated circuit (ASIC), or a micro processing unit (MPU).

The control device 31 acts as a controller 310, when the processor operates according to the control program stored in the storage device 35. The control device 31 also acts as a consistency decider 311, a newness decider 312, a usability decider 313, and a firmware transmitter 314, when the processor operates according to the update tool 350 stored in the storage device 35.

Here, the controller 100 may be constituted in the form of a hardware circuit, instead of being realized by the operation of the control device 10 according to the control program. This also applies to other embodiments, unless otherwise specifically noted.

The controller 310 serves to control the overall operation of the information processing apparatus 3. The controller 310 is connected to the operation device 32, the display device 33, the communication device 34, and the storage device 35, and controls the operation of the mentioned components.

For example, the controller 310 requests the server 2 to transmit the firmware package, through the communication device 34. The controller 310 stores the firmware package downloaded from the server 2, in the FP storage region 351.

The consistency decider 311 decides the consistency between the updating firmware UFW and the firmware currently in use installed in the image forming apparatus 1, through comparison of the type and the purpose of use. The consistency decider 311 decides that the updating firmware UFW of the same type and purpose of use as the firmware currently in use, is consistent with the firmware currently in use.

For example, when the firmware shown in Fig. 2A is installed in the image forming apparatus 1, the consistency decider 311 decides that, among the five pieces of updating firmware UFW1 to UFW5 included in the firmware package FP1 (see Fig. 3), the updating firmware UFW1 the type of which is "controller FW" and the purpose of use of which is "4in1", the updating firmware UFW3 the type of which is "engine FW" and the purpose of use of which is "standard", and the updating firmware UFW4 the type of which is "language (Brazil) FW" and the purpose of use of which is "standard", are consistent with the firmware currently in use, because the type and the purpose of use are the same as those of the firmware currently in use. In other words, the consistency decider 311 decides that the updating firmware UFW2 and UFW5 are not consistent with the firmware currently in use.

Likewise, when the firmware shown in Fig. 2C is installed in the image forming apparatus 1, the consistency decider 311 decides that, among the five pieces of updating firmware UFW1 to UFW5 included in the firmware package FP1 (see Fig. 3), the updating firmware UFW3 the type of which is "engine FW" and the purpose of use of which is "standard", and the updating firmware UFW4 the type of which is "language (Brazil) FW" and the purpose of use of which is "standard", are consistent with the firmware currently in use, because the type and the purpose of use are the same as those of the firmware currently in use.

The newness decider 312 decides whether the version is newer than that of the firmware currently in use, with respect to the updating firmware UFW decided by the consistency decider 311 to be consistent with the firmware currently in use.

The usability decider 313 decides that the updating firmware, decided by the newness decider 312 to be of the newer version than the firmware currently in use, is usable for updating.

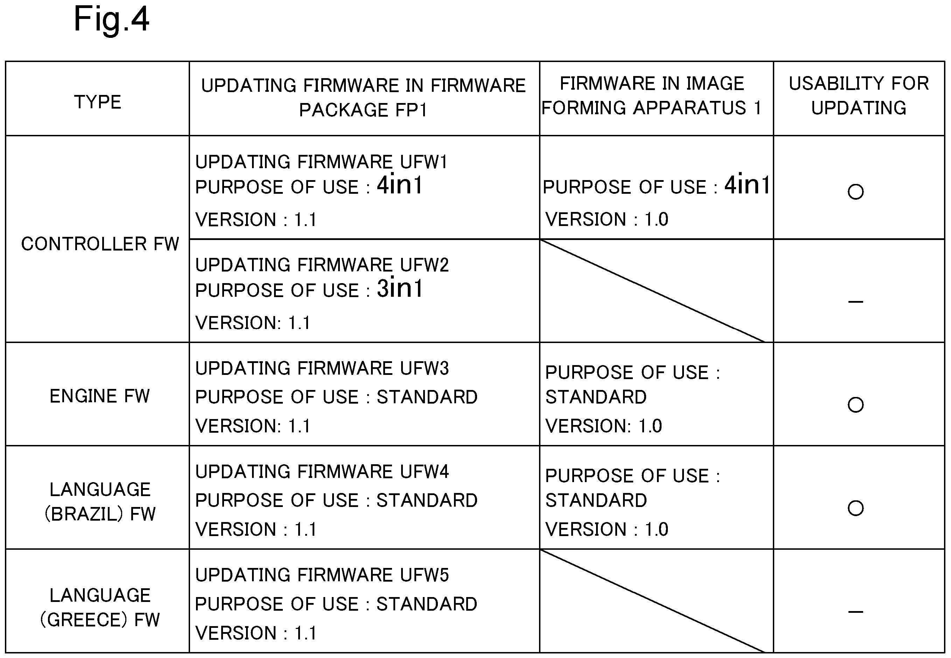

For example, in the case where the firmware shown in Fig. 2A is installed in the image forming apparatus 1, when the five pieces of updating firmware included in the firmware package FP1 are to be used for updating, three pieces of updating firmware, namely the updating firmware UFW1, UFW3, and UFW4, among the five pieces of updating firmware included in the firmware package FP1, are consistent with the firmware currently in use, and newer in version than the firmware currently in use, as shown in Fig. 4. Therefore, the usability decider 313 decides that the updating firmware UFW1, UFW3, and UFW4 are usable for updating.

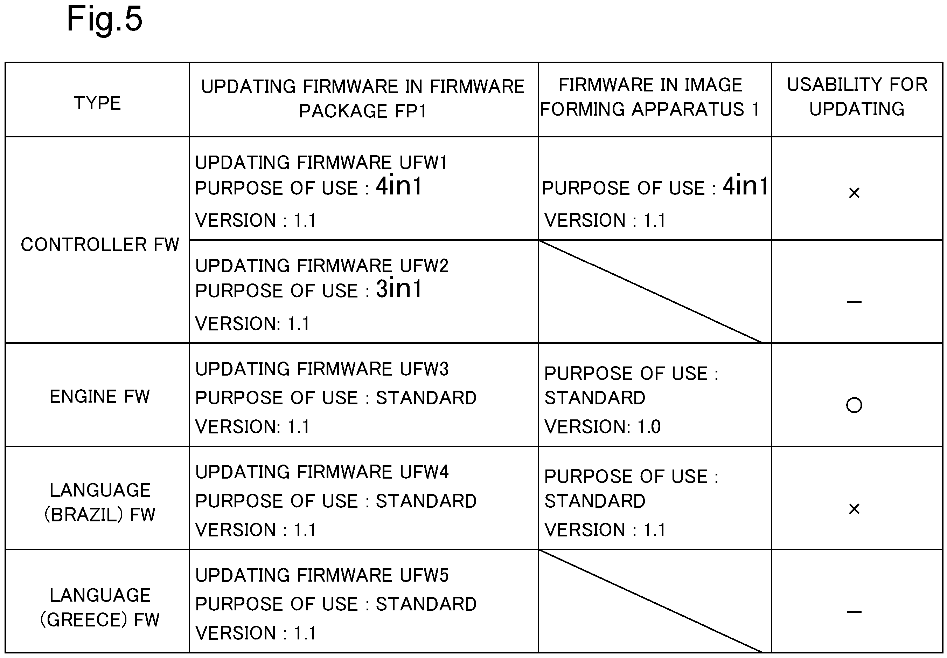

Likewise, in the case where the firmware shown in Fig. 2B is installed in the image forming apparatus 1, when the five pieces of updating firmware included in the firmware package FP1 are to be used for updating, three pieces of updating firmware, namely the updating firmware UFW1, UFW3, and UFW4, among the five pieces of updating firmware included in the firmware package FP1, are consistent with the firmware currently in use, but only the updating firmware UFW3 is newer in version than the firmware currently in use, as shown in Fig. 5. Therefore, the usability decider 313 decides that only the updating firmware UFW3 is usable for updating.

Here, when the usability decider 313 decides, on the basis of the decision result provided by the consistency decider 311, that the image forming apparatus 1 includes at least one piece of firmware currently in use that is consistent with none of the updating firmware UFW included in the firmware package FP1, the usability decider 313 may decide that none of the updating firmware included in the firmware package is usable for updating.

The firmware transmitter 314 transmits the updating firmware, decided by the usability decider 313 to be usable for updating, to the image forming apparatus 1 through the communication device 34.

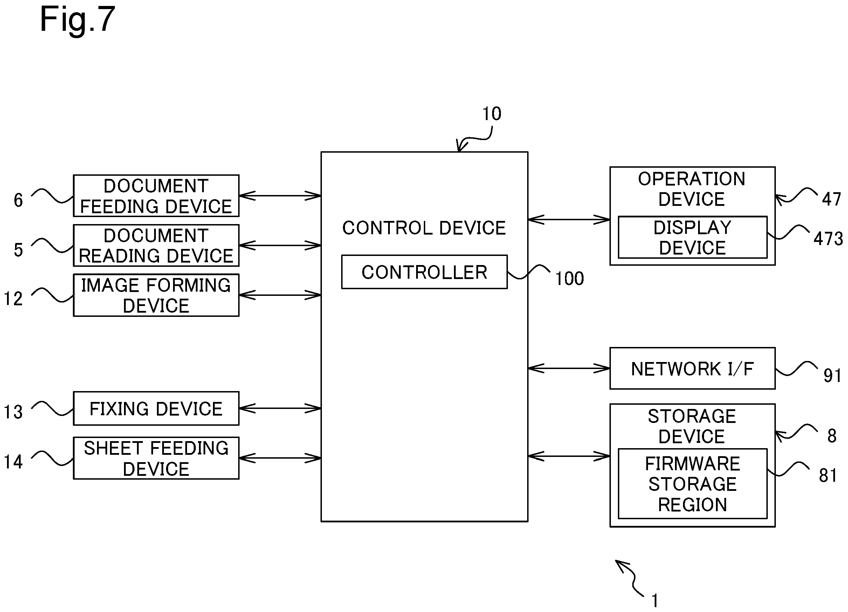

Fig. 7 is a functional block diagram, schematically showing an essential internal configuration of the image forming apparatus 1. The image forming apparatus 1 includes a control device 10, a document feeding device 6, a document reading device 5, an image forming device 12, a fixing device 13, a sheet feeding device 14, an operation device 47, a network interface (I/F) 91, and a storage device 8.

The document feeding device 6 is openably connected to the upper face of the document reading device 5, for example via a hinge. The document feeding device 6 serves as a document retention cover, when a document placed on a platen glass is to be read.

The document reading device 5 includes a scanner. The document reading device 5 reads the document delivered from the document feeding device 6, or placed on the platen glass. The document reading device 5 can sequentially read a plurality of documents delivered from the document feeding device 6.

To perform the document reading operation, the image forming apparatus 1 operates as follows. The document reading device 5 optically reads the image on the document delivered from the document feeding device 6 to the document reading device 5, or placed on the platen glass, and generates image data. The image data generated by the document reading device 5 is stored, for example, in an image memory.

To perform the image forming operation, the image forming apparatus 1 operates as follows. The image forming device 12 includes a photoconductor drum, a charging device, an exposure device, a developing device, and a primary transfer device for each of the colors. The image forming device 12 includes a mechanism that forms an image on a recording sheet, by secondary transfer via an intermediate transfer belt.

The image forming device 12 forms a toner image on the recording sheet delivered from the sheet feeding device 14, thereby producing a printed material, on the basis of the image data generated through the document reading operation, image data stored in the image memory, or image data received from a computer connected via the network.

The fixing device 13 includes a heat roller, a pressure roller, and a drive mechanism therefor. The fixing device 13 heats and presses the recording sheet on which the toner image has been formed by the image forming device 12, at the nip region defined between the mentioned rollers, to thereby fix the toner image onto the recording sheet. The recording sheet that has undergone the fixing process is delivered to an output tray.

The sheet feeding device 14 includes a sheet cassette. The sheet feeding device 14 also includes a pickup roller, transport rollers, a transport route, and rotational drive mechanism for the rollers, to pick up the recording sheet from the sheet cassette and transport the recording sheet to the image forming device 12.

The operation device 47 includes various hard keys to be operated by the user. The operation device 47 receives the user's instructions inputted with the hard keys, to execute the functions and operations that the image forming apparatus 1 is configured to perform, for example the image forming operation.

The operation device 47 includes a display device 473 for displaying, for example, an operation guide for the user. The operation device 47 receives, through a touch panel provided on the display device 473, the user's instruction based on the touch operation performed by the user on the screen displayed on the display device 473, or on a physical key.

The display device 473 includes, for example, an LCD. When the user touches a button or a key displayed on the screen, the touch panel receives the instruction corresponding to the touched position. In this case, the touch panel acts as a part of the operation device.

The network I/F 91 is a communication interface that transmits and receives various types of data to and from an external device (e.g., server 2 or information processing apparatus 3) located inside the local area, or on the internet.

The storage device 8 is a large-capacity storage device such as a hard disk drive (HDD) and a solid-state drive (SSD), and contains various control programs. The storage device 8 includes a firmware storage region 81. In the firmware storage region 81, the firmware shown in Fig. 2A to Fig. 2C is stored.

The control device 10 includes a processor, a RAM, a ROM, and an exclusive hardware circuit. The processor is, for example, a CPU, an ASIC, or an MPU.

The control device 10 acts as a controller 100, when the processor operates according to the control program stored in the storage device 8. Here, the controller 100 may be constituted in the form of a hardware circuit, instead of being realized by the operation of the control device 10 according to the control program. This also applies to other embodiments, unless otherwise specifically noted.

The controller 100 serves to control the overall operation of the image forming apparatus 1. The controller 100 is connected to the document feeding device 6, the document reading device 5, the image forming device 12, the fixing device 13, the sheet feeding device 14, the operation device 47, the network I/F 91, and the storage device 8. The controller 100 controls the operation of the mentioned components, and executes, for example, the processings required for the image forming operation to be performed by the image forming apparatus 1.

For example, the controller 100 requests the information processing apparatus 3 to update the firmware, according to the instruction from the user received through the operation device 47. The controller 100 installs the firmware in the storage device 8.

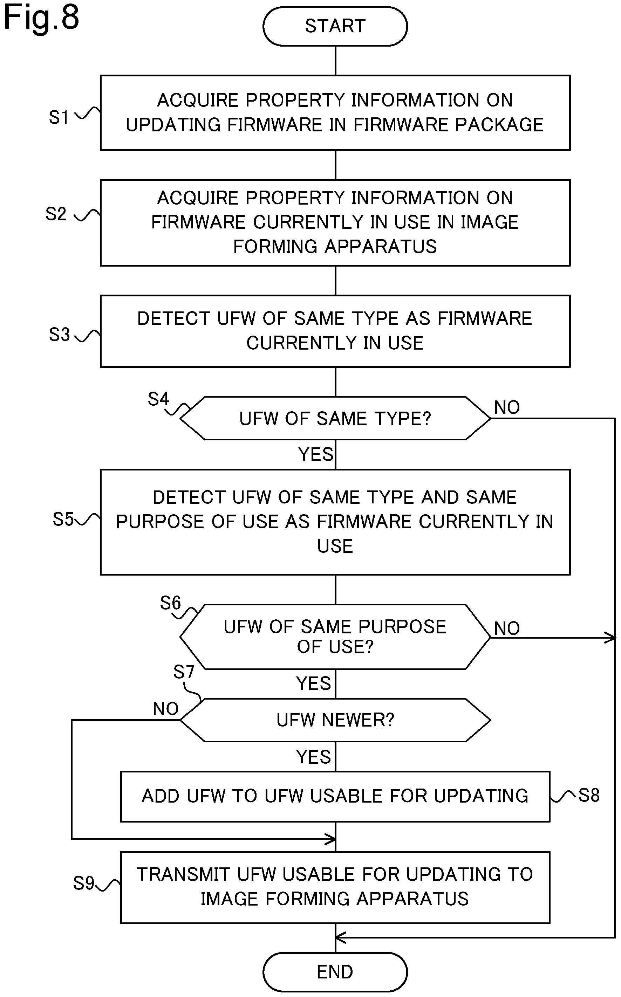

Referring now to a flowchart shown in Fig. 8, an updating process of the firmware installed in the image forming apparatus 1, executed by the information processing apparatus 3, will be described hereunder. The updating process is executed by the information processing apparatus 3, upon receipt of the request to update the firmware transmitted from the image forming apparatus 1, through the communication device 34.

For the description given hereunder, it will be assumed that the firmware package FP1 shown in Fig. 3 is stored in the FP storage region 351.

The consistency decider 311 of the information processing apparatus 3 retrieves and acquires property information (type information, purpose of use information, version information) regarding the updating firmware UFW included in the firmware package FP1 stored in the FP storage region 351 (step S1).

The consistency decider 311 also requests, through the communication device 34, the image forming apparatus 1 that has requested to update the firmware, to transmit the property information (type information, purpose of use information, version information) regarding the firmware (firmware currently in use) installed in the image forming apparatus 1.

When the network I/F 91 receives the request, the controller 100 of the image forming apparatus 1 transmits the property information regarding the firmware (firmware currently in use) installed in the image forming apparatus 1, to the information processing apparatus 3 through the network I/F 91.

The consistency decider 311 of the information processing apparatus 3 receives the property information regarding the firmware currently in use, through the communication device 34 (step S2). After step S2, the consistency decider 311 proceeds to step S3.

The operation of step S3 to S8 is for comparing between the updating firmware UFW1 to UFW5 included in the firmware package FP1 (see Fig. 3), and the firmware currently in use installed in the image forming apparatus 1. The operation of step S3 to S8 is performed with respect to each of the firmware currently in use (each of the controller FW, engine FW, and language (Brazil) FW), and repeated until the operation with respect to all of the firmware currently in use is finished.

First, the consistency decider 311 detects the updating firmware UFW of the same type as one of the firmware currently in use, on the basis of the property information (step S3). On the basis of the detection result of step S3, the consistency decider 311 decides whether the updating firmware UFW of the same type as the firmware currently in use is included in the firmware package FP1 (step S4).

Upon deciding that the updating firmware UFW of the same type as the firmware currently in use is included in the firmware package FP1 (YES at step S4), the consistency decider 311 detects, on the basis of the property information, the updating firmware UFW of the same purpose of use as the firmware currently in use, among the updating firmware UFW of the same type as the firmware currently in use (step S5). On the basis of the result of step S5, the consistency decider 311 decides whether the updating firmware UFW of the same purpose of use as the firmware currently in use is included in the firmware package FP1 (step S6).

When the consistency decider 311 decides that the updating firmware UFW of the same purpose of use as the firmware currently in use is included in the firmware package FP1 (YES at step S6), the newness decider 312 decides, with respect to the updating firmware UFW decided by the consistency decider 311 to be consistent with the firmware currently in use, whether the version is newer than that of the firmware currently in use, on the basis of the property information (step S7).

When the newness decider 312 decides that the updating firmware UFW is newer in version than the firmware currently in use (YES at step S7), the usability decider 313 decides that the updating firmware UFW decided to be newer is usable for updating, and adds such updating firmware UFW to the updating firmware UFW to be transmitted to the image forming apparatus 1 (step S8).

In contrast, when the newness decider 312 decides that the version of the updating firmware UFW is not newer than that of the firmware currently in use (NO at step S7), the usability decider 313 does not decide that the updating firmware UFW is usable for updating.

When the operation of step S3 to S8 has been executed with respect to all of the firmware currently in use, the firmware transmitter 314 transmits all of the updating firmware UFW, decided by the usability decider 313 to be usable for updating, to the image forming apparatus 1 through the communication device 34 (step S9). After step S9, the control device 31 finishes the updating process.

Through the series of operation from step S1 to step S9, when the firmware shown in Fig. 2A is installed in the image forming apparatus 1, the updating firmware UFW1, UFW3, and UFW4 are decided to be usable for updating as shown in Fig. 4, and transmitted to the image forming apparatus 1.

Likewise, when the firmware shown in Fig. 2B is installed in the image forming apparatus 1, the updating firmware UFW3 is decided to be usable for updating as shown in Fig. 5, and transmitted to the image forming apparatus 1.

As described above, the firmware transmitter 314 of the information processing apparatus 3 transmits all of the updating firmware UFW, decided by the usability decider 313 to be usable for updating, to the image forming apparatus 1 through the communication device 34.

Upon receipt of the updating firmware UFW transmitted as above, through the network I/F 91, the controller 100 of the image forming apparatus 1 stores the received updating firmware UFW in the firmware storage region 81, and updates the firmware currently in use, using the updating firmware UFW acquired as above.

In the case where, during the mentioned series of operation, the consistency decider 311 decides that no updating firmware UFW of the same type as the firmware currently in use is included in the firmware package FP1 (NO at step S4), and where the consistency decider 311 decides that no updating firmware UFW of the same purpose of use as the firmware currently in use is included in the firmware package FP1 (NO at step S6), the usability decider 313 decides that none of the updating firmware UFW1 to UFW5 included in the firmware package FP1 is usable for updating. In this case, the control device 31 finishes the updating process.

Now, when the firmware is updated, an unnecessary update may be performed. Therefore, it is important to correctly decide whether new updating firmware is usable for updating the firmware installed in the image forming apparatus.

For example, a technique to decide whether it is necessary to update the firmware, using a check list, is generally known. In this case, however, the check list has to be prepared and managed in advance, and special data is required for the decision.

In addition, a technique to decide whether it is necessary to update an application, using application data, is generally known. In this case, however, the application data has to be constantly updated to the latest version. In addition, the mentioned known techniques are not focused on the updating process using the firmware package in which a plurality of pieces of updating firmware are packaged.

According to the foregoing embodiment, in contrast, the consistency between the updating firmware and the firmware currently in use is decided on the basis of the type and the purpose of use, and then it is decided whether the updating firmware is usable for updating, depending on whether the version is newer. Therefore, it can be decided whether the updating firmware is usable for updating, with respect to each of the plurality of pieces of updating firmware included in the firmware package, without the need to prepare special data for the decision.

As a first variation of the foregoing embodiment, the following arrangement may be adopted. For example, in the case where the firmware shown in Fig. 2C is installed in the image forming apparatus 1, when updating is to be performed with the five pieces of updating firmware included in the firmware package FP1 (see Fig. 3), the updating firmware UFW consistent with the firmware currently in use, the type of which is "controller FW" and the purpose of use of which is "4in1 (custom)", is not included in the five pieces of updating firmware UFW1 to UFW5 included in the firmware package FP1.

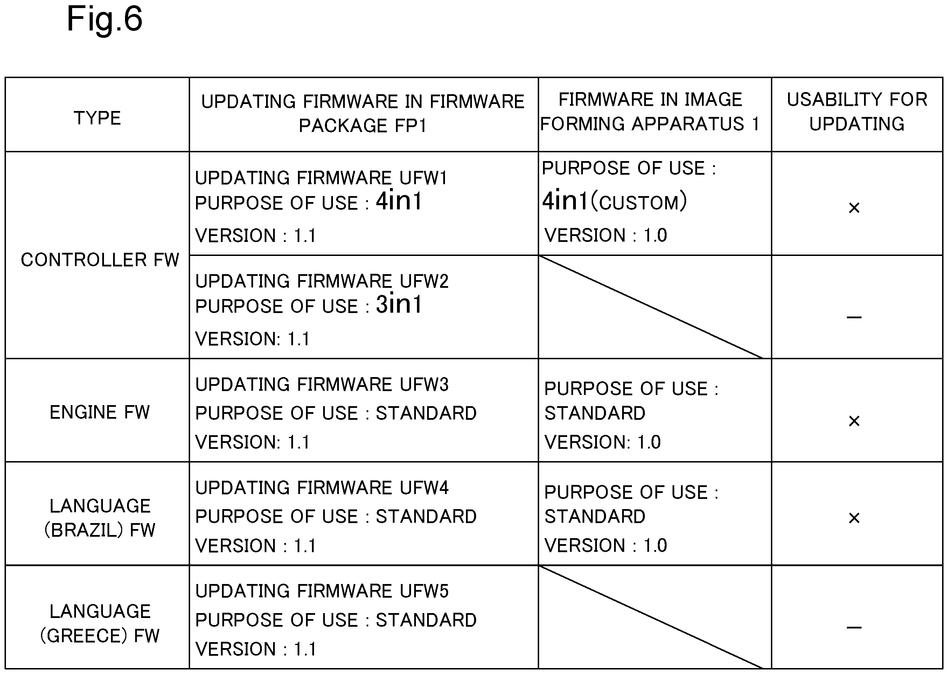

When the consistency decider 311 decides accordingly that at least one piece of firmware currently in use, consistent with none of the updating firmware UFW included in the firmware package, is installed, the usability decider 313 may decide that none of the updating firmware UFW1 to UFW5 included in the firmware package FP1 is usable for updating, as shown in Fig. 6. Although the updating firmware UFW3 and UFW4 satisfy the condition for updating, when individually checked, such updating firmware are also decided to be unusable, in this case.

Thus, in the case where at least one piece of firmware currently in use, consistent with none of the updating firmware UFW included in the firmware package, is installed, the whole firmware package itself may be decided to be unusable for updating.

Regarding the image forming apparatus 1, a situation that is unable to be handled with the ordinary updating process may arise, for example when the function is to be expanded. For example, updating with updating firmware inconsistent with the firmware currently in use, or updating to an older version, may be required.

Accordingly, as a second variation of the embodiment, the usability decider 313 may keep from utilizing the decision result on either of the items provided by the consistency decider 311 (i.e., either of type and purpose of use), or decision result provided by the newness decider 312, designated by the instruction inputted to the operation device 32, as a basis for denying the decision that the updating firmware is usable for updating, irrespective of the decision result.

For example, when an instruction to ignore the decision about the purpose of use by the consistency decider 311 is inputted to the operation device 32, the usability decider 313 regards the updating firmware UFW as being consistent with the firmware currently in use, provided that the consistency decider 311 decides that the type is consistent with the firmware currently in use, irrespective of the decision result about the purpose of use provided by the consistency decider 311.

When an instruction to ignore the decision made by the newness decider 312 is inputted to the operation device 32, the usability decider 313 decides, irrespective of the decision result provided by the newness decider 312, that the updating firmware UFW decided by the consistency decider 311 to be consistent with the firmware currently in use, is usable for updating.

In addition, in the case where a plurality of pieces of updating firmware UFW that are of the same type as the firmware currently in use are found, the consistency decider 311 may decide that the updating firmware UFW, the purpose of use of which is closest to that of the firmware currently in use, is consistent with the firmware currently in use.

As a third variation of the embodiment, in the case where predetermined decision change information is included in the firmware package, the usability decider 313 may decide that the updating firmware is usable for updating, according to the instruction inputted to the operation device 32, irrespective of the decision result provided by the consistency decider 311 and the newness decider 312.

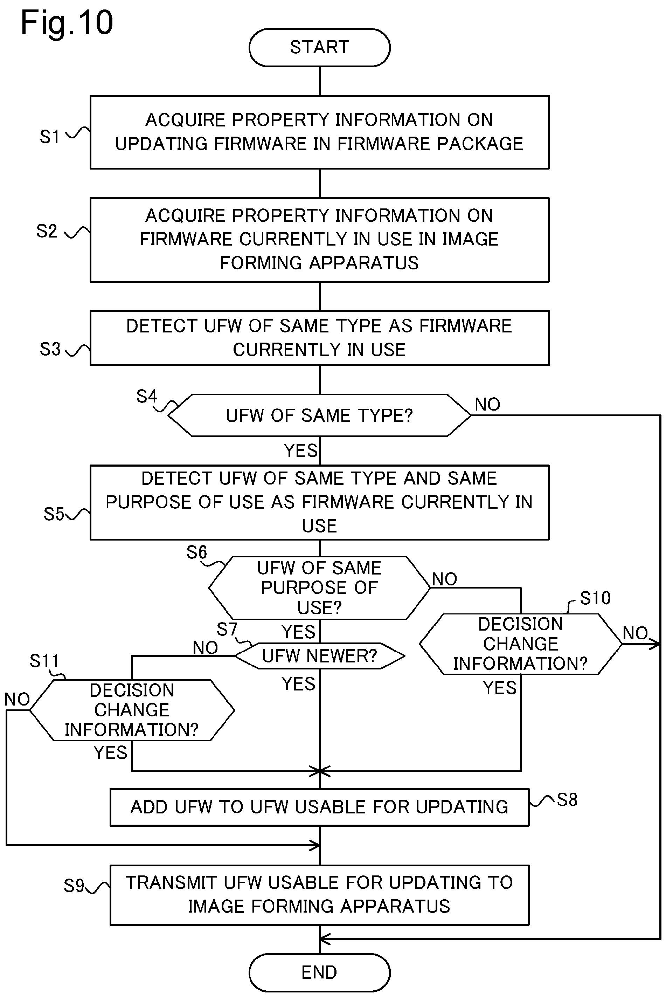

The third variation will be described hereunder, with reference to a flowchart shown in Fig. 10, focusing on the steps different from the steps specified in the flowchart shown in Fig. 8.

Upon deciding at step S6 that there is no updating firmware UFW of the same purpose of use, as the firmware currently in use (NO at step S6), the consistency decider 311 decides whether the firmware package includes the decision change information, in other words whether updating with the updating firmware UFW of a different purpose of use is permitted (step S10).

When the consistency decider 311 decides that the firmware package includes the decision change information (YES at step S10), the usability decider 313 decides that the updating firmware UFW of the same type, though different in purpose of use, is usable for updating, and adds such updating firmware UFW to the updating firmware UFW to be transmitted to the image forming apparatus 1 (step S8).

When the newness decider 312 decides at step S7 that the updating firmware UFW, of the same type and purpose of use as the firmware currently in use, is not newer in version than the firmware currently in use (NO at step S7), the usability decider 313 decides whether the firmware package includes the decision change information, in other words whether updating with the updating firmware UFW the version of which is not new is permitted (step S11).

Upon deciding that the firmware package includes the decision change information (YES at step S11), the usability decider 313 decides that the updating firmware UFW of the same type and purpose of use, though not of a newer version, is usable for updating, and adds such updating firmware UFW to the updating firmware UFW to be transmitted to the image forming apparatus 1 (step S8).

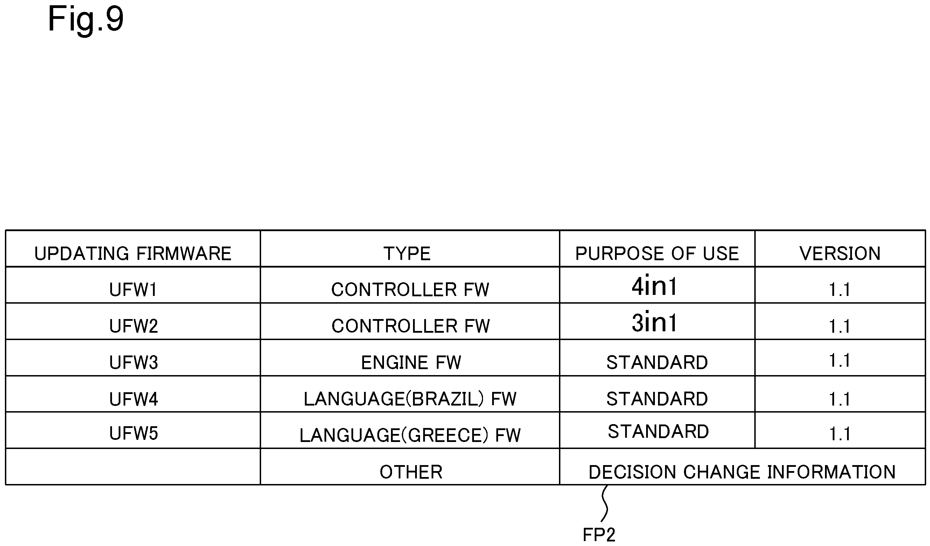

For example, when a firmware package FP2 includes five pieces of updating firmware UFW1 to UFW5 and the decision change information as shown in Fig. 9, and the firmware shown in Fig. 2C is installed in the image forming apparatus 1, the consistency decider 311 decides that the updating firmware UFW1 in the firmware package FP2, and the "controller FW" which is the firmware currently in use, are different in purpose of use.

However, since the firmware package FP2 includes the decision change information, the usability decider 313 decides that updating firmware UFW1 is consistent with the firmware currently in use, irrespective of the mentioned decision result provided by the consistency decider 311, and decides that the updating firmware UFW1 is usable for updating.

Although the information processing apparatus 3 includes the consistency decider 311, the newness decider 312, and the usability decider 313 according to the foregoing embodiment, another embodiment may be adopted, where the control device 10 of the image forming apparatus 1 acts as the consistency decider 311, the newness decider 312, and the usability decider 313, and decide whether the updating firmware, stored in the firmware storage region 81 of the image forming apparatus 1, is usable for updating.

The invention may be modified in various manners, without limitation to the foregoing embodiment. Further, the configurations and processings described in the embodiment with reference to Fig. 1 to Fig. 10 are merely exemplary, and in no way intended to limit the invention to those configurations and processings.

## Claims

1. An updating device (3) comprising:
a communication device (34) communicates with an image forming apparatus (1);
a storage device (351) that stores therein a firmware package including a plurality of pieces of updating firmware; and
a control device (31) including a processor, and configured to act, when the processor executes a control program, as:
a consistency decider (311) that decides, on a basis of a type and a purpose of use of each of a plurality of pieces of updating firmware, and a type and a purpose of use of at least one piece of firmware currently in use installed in the image forming apparatus (1), whether consistent updating firmware, the type and the purpose of use of which are same as those of the at least one piece of firmware currently in use, exists among the plurality of pieces of updating firmware;
a newness decider (312) that decides, when the consistency decider (311) decides that the consistent updating firmware exists, whether a version of the consistent updating firmware is newer than a version of the firmware currently in use, the type and the purpose of use of which are same as those of the consistent updating firmware;
a usability decider (313) that decides that the consistent updating firmware, the version of which has been decided by the newness decider (312) to be newer than the version of the firmware currently in use, is usable for updating; and
a firmware transmitter (314) that transmits the consistent updating firmware, decided by the usability decider (313) to be usable for updating, to the image forming apparatus (1) through the communication device (34).

2. The updating device (3) according to claim 1,
wherein, when the consistency decider (311) decides that at least one piece of the firmware currently in use, different in type and purpose of use from all of the plurality of pieces of updating firmware, exists among the at least one piece of firmware currently in use, the usability decider (313) decides that all of the plurality of pieces of updating firmware are not usable for updating.

3. The updating device (3) according to claim 1 or claim 2, further comprising an operation device (32) to which an instruction of a user is inputted,
wherein the usability decider (313) keeps from utilizing a decision result provided by the consistency decider (311) on either the type or the purpose of use, or a decision result provided by the newness decider (312), designated by an instruction inputted to the operation device (32), as a basis for denying a decision that the updating firmware is usable for updating, irrespective of the decision result.

4. The updating device (3) according to claim 1 or claim 2,
wherein, when the firmware package includes predetermined decision change information, the usability decider (313) decides that at least one of the plurality of pieces of updating firmware is usable for updating, irrespective of a decision result provided by the consistency decider (311) and the newness decider (312).

5. The updating device (3) according to claim 1 or claim 2,
wherein, when a plurality of pieces of updating firmware are of the same type as the firmware currently in use, the consistency decider (311) decides that the updating firmware, closest in purpose of use to the firmware currently in use, is consistent with the firmware currently in use.

6. An image forming apparatus (1) comprising:
an image forming device (12) that forms an image on a recording sheet;
a storage device (81) that stores therein a firmware package including a plurality of pieces of updating firmware, and at least one piece of firmware currently in use; and
a control device (10) including a processor, and configured to act, when the processor executes a control program, as:
a consistency decider (311) that decides, on a basis of a type and a purpose of use of each of a plurality of pieces of updating firmware, and a type and a purpose of use of at least one piece of firmware currently in use, whether consistent updating firmware, the type and the purpose of use of which are same as those of the at least one piece of firmware currently in use, exists among the plurality of pieces of updating firmware;
a newness decider (312) that decides, when the consistency decider (311) decides that the consistent updating firmware exists, whether a version of the consistent updating firmware is newer than a version of the firmware currently in use, the type and the purpose of use of which are same as those of the consistent updating firmware;
a usability decider (313) that decides that the consistent updating firmware, the version of which has been decided by the newness decider (312) to be newer than the version of the firmware currently in use, is usable for updating; and
a controller (100) that updates the firmware currently in use, using the consistent updating firmware decided by the usability decider (313) to be usable for updating.
